# EUROPÄISCHE PATENTANMELDUNG

(11) **EP 1 506 829 A2**
(43) Veröffentlichungstag der Anmeldung: **16.02.2005**
(21) Anmeldenummer: 04008921.1
(22) Anmeldetag: 15.04.2004
(51) Int. Cl.: B23B 31/16

(54) **Spannfutter**

(30) Priorität: 12.08.2003 DE 20312535 U
(71) Anmelder: Röhm GmbH, 89567 Sontheim (DE)
(72) Erfinder: Papenfuss, Jens, 89567 Sontheim (DE)
(74) Vertreter: Hentrich, Swen, Dr.

(57) **Zusammenfassung**

Die Erfindung betrifft ein Spannfutter für Werkzeugmaschinen, mit einem Futterkörper (2), in dem in mehreren radialen Führungsnuten (4) Spannbacken (5) angeordnet sind, mit die Spannbacken (5) antreibenden, im Futterkörper (2) in Keilstangentaschen (7) quer zu den Führungsnuten (4) verschiebbaren Keilstangen (6), die zur Bildung einer Schrägverzahnung mit Zahnreihen (8) in entsprechende Zahnlücken (9) der Spannbacken (5) in Eingriff zu bringen sind, und mit einem Sperrbolzen (10) für jede Keilstange (6), der in einer radial im Futterkörper (2) orientierten Bolzenaufnahme (11) angeordnet ist und mit einem Bolzenzapfen (12) in eine winkelförmige, in der Keilstange (6) ausgebildete Nut (13) eingreift. Der Sperrbolzen (10) ist in einer im Futterkörper (2) gegen Verdrehen gesicherten Büchse (14) angeordnet, die am radial inneren Rand eine in Umfangsrichtung nicht geschlossene Randleiste (16) aufweist, wobei der Sperrbolzen (10) einen Bolzenflansch (17) besitzt, der neben der Randleiste (16) unter die Wandung der Büchse (14) greift, und wobei der Rand des Bolzenzapfens (12) mit dem Rand des Bolzenflanschs (17) fluchtet.

## Beschreibung

Die Erfindung betrifft ein Spannfutter für Werkzeugmaschinen, insbesondere Drehmaschinen, mit einem Futterkörper, in dem in mehreren radialen Führungsnuten Spannbacken angeordnet sind, mit die Spannbacken antreibenden, im Futterkörper in Keilstangentaschen quer zu den Führungsnuten verschiebbaren Keilstangen, die zur Bildung einer Schrägverzahnung mit Zahnreihen in entsprechende Zahnlücken der Spannbacken in Eingriff zu bringen sind, und mit einem Sperrbolzen für jede Keilstange, der in einer radial im Futterkörper orientierten Bolzenaufnahme angeordnet ist und mit einem Bolzenzapfen in eine winkelförmige, in der Keilstange ausgebildete Nut eingreift.

Derartige Spannfutter sind in der Praxis weit verbreitet, wobei der in die winkelförmige Nut eingreifende Bolzenzapfen dazu dient, einer einem Lösen der Einspannung entsprechenden Bewegung der Keilstange entgegen zu wirken. Dabei ist darauf zu achten, dass der Bolzenzapfen bei einer schlagartigen Beschleunigung der Keilstange die dabei auftretenden Belastungen aufnehmen muss und nicht abgeschert werden darf.

Der Erfindung liegt daher die Aufgabe zugrunde, ein Spannfutter der eingangs genannten Art so auszubilden, dass die Belastbarkeit des Bolzenzapfens insbesondere gegenüber von der Nutwandung der Keilstange auf diesen ausgeübte Schwerkräfte verbessert ist.

Diese Aufgabe wird nach der Erfindung bei einem Spannfutter der eingangs genannten Art dadurch gelöst, dass der Sperrbolzen in einer im Futterkörper gegen Verdrehen gesicherten Büchse angeordnet ist, die am radial inneren Rand eine in Umfangsrichtung nicht geschlossene Randleiste aufweist, dass der Sperrbolzen einen Bolzenflansch besitzt, der neben der Randleiste unter die Wandung der Büchse greift, und dass der Rand des Bolzenzapfens mit dem Rand des Bolzenflanschs fluchtet. Durch diese Gestaltung ist an dem Sperrbolzen in dem Bereich seines Eingriffes in die Nut der Keilstange eine erhöhte Materialstärke bereit gestellt, ohne dazu insgesamt über die gesamte Länge einen Sperrbolzen vergrößerten Durchmessers einsetzen zu müssen. Durch den Bolzenflansch kann die Materialstärke des Bolzenzapfens mehr als verdoppelt werden, woraus sich die gewünschte erhöhte Belastbarkeit ergibt.

Im Rahmen der Erfindung besonders bevorzugt ist eine Ausführungsform, die dadurch gekennzeichnet ist, dass der in die winkelförmige Nut eingreifende Bolzenzapfen im Querschnitt die Gestalt einer Acht aufweist mit auf der Drehachse des Sperrbolzens zentriertem einen Auge der Acht. Durch diese Gestaltung ist die gewünschte exzentrische Positionierung des Bolzenzapfens in der Nut der Keilstange ermöglicht, um bei einer Verdrehung des Sperrbolzens die Keilstange in der Keilstangentasche des Futterkörpers zu verschieben.

Einer Erhöhung der Sicherheit des erfindungsgemäßen Spannfutters dient auch, dass zum Backenwechsel jeder Sperrbolzen der Bolzenaufnahme radial gegen die Kraft einer Feder aus einer gegenüber dem Futterkörper gegen Verdrehen gesicherten ersten Stellung in eine gegen Verdrehen ungesicherte zweite Stellung verschiebbar ist. Um die Bedienbarkeit des Spannfutters insbesondere für den Fall eines gewünschten Spannbackenwechsels zu vereinfachen, ist vorgesehen, dass die Randleiste zumindest einen Anschlag zur Begrenzung des Drehwinkels des Sperrbolzens in dessen zweiter Stellung aufweist.

Um den Sperrbolzen ohne das Einwirken externer, von dem Bedienpersonal aufgebrachter Kräfte in der ersten Stellung zu halten, ist in einer Durchgangsöffnung des Sperrbolzens ein Bolzenstift angeordnet, der sich auf dem Grund der winkelförmigen Nut der Keilstange abstützt und die Feder zur Beaufschlagung des Sperrbolzens trägt.

In der die Durchgangsöffnung begrenzenden Wandung des Sperrbolzens ist eine Rastkugel angeordnet, die in der ersten Stellung in eine Rastaufnahme der Büchse eingreift und in der zweiten Stellung außer Eingriff ist, so dass mit geringem konstruktiven Aufwand ohne Schwierigkeiten bei der Fertigung und der Montage über die Rastkugel die unterschiedliche Verdrehbarkeit des Sperrbolzens in der ersten und der zweiten Stellung erreicht ist.

Ganz besonders bevorzugt ist weiterhin, wenn in der Keilstange in axialer Richtung des Futterkörpers verstellbar ein Kontrollbolzen und ein Sicherungsbolzen gelagert sind, zu deren gemeinsamer, in entgegengesetzter Richtung erfolgender Verstellung ein Koppelglied vorgesehen ist sowie eine eine Verstellung des Kontrollbolzens in Richtung der Führungsnut bewirkende Feder, und wenn in dem mit dem Futterkörper verbundenen Futterflansch eine Rast ausgebildet ist, die den Sicherungsbolzen aufnimmt, wenn der Kontrollbolzen in die Führungsnut eingreift. Durch diesen zusätzlichen Sicherungsmechanismus ist gewährleistet, dass eine Verschiebung der Keilstange und damit ein Spannen des Spannfutters nur möglich ist, wenn die Spannbacke ausreichend tief in die Führungsnut eingesetzt ist und der Kontrollbolzen selber nicht mehr in die Führungsnut vorstehen kann.

Im folgenden wird die Erfindung an einem in der Zeichnung dargestellten Ausführungsbeispiel näher erläutert; es zeigen:
- Fig. 1: einen Längsschnitt durch ein erfindungsgemäßes Spannfutter,
- Fig. 2: eine Sicht aus Richtung des Pfeiles II aus Fig. 1, geschnitten dargestellt mit strichliert angedeuteten tieferliegenden Strukturen,

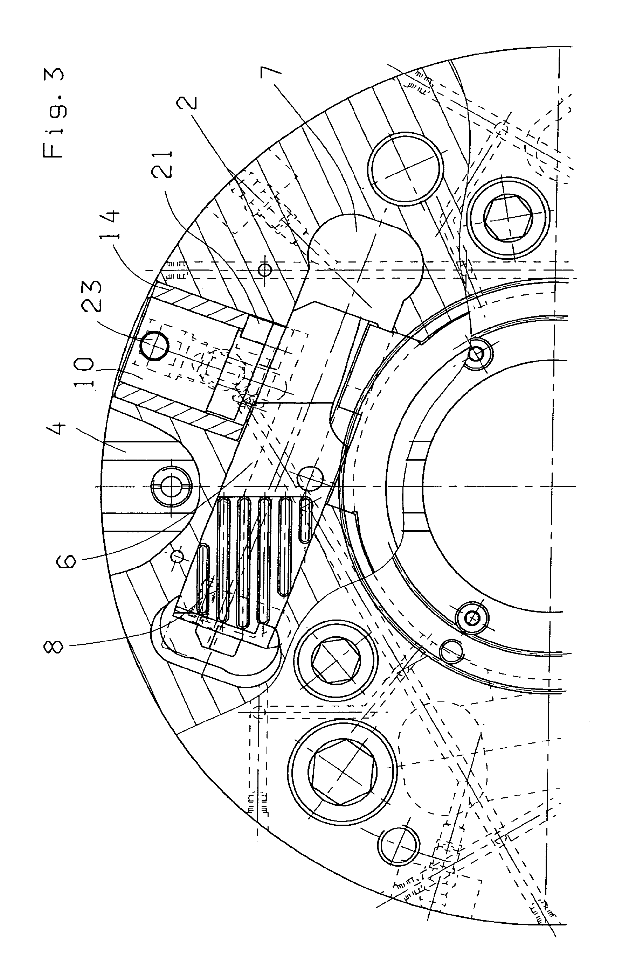

- Fig. 3: den Schnitt III - III aus Fig. 2,

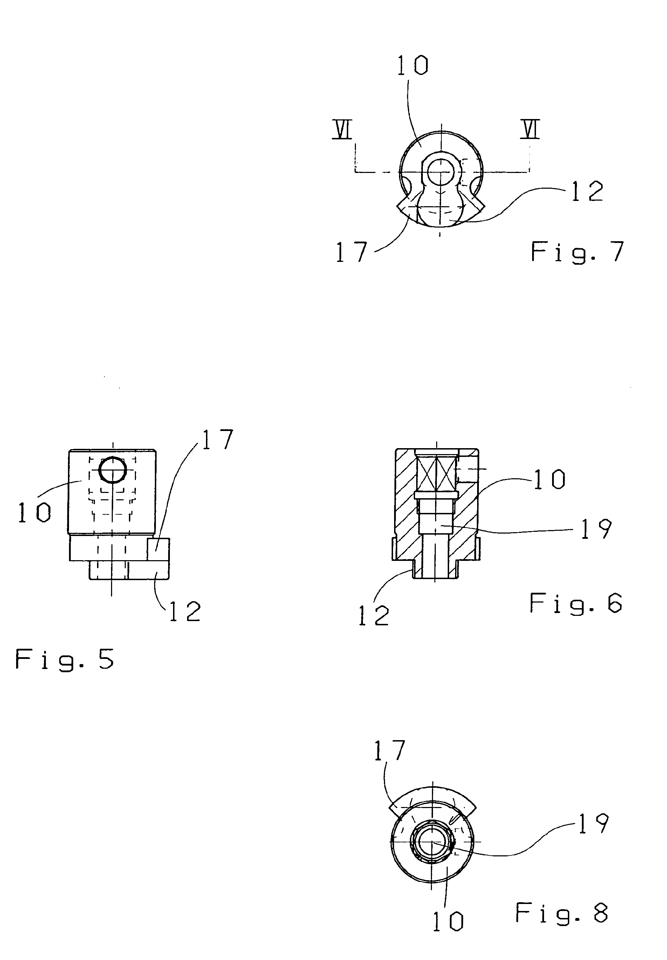

- Fig. 4: den Schnitt IV - IV aus Fig. 2,
- Fig. 5: eine Seitenansicht des Sperrbolzens,
- Fig. 6: den Schnitt VI - VI aus Fig. 7,
- Fig. 7: eine Ansicht des Sperrbolzens von unten, also der, bezogen auf den Futterkörper des Spannfutters, radial innenliegenden Seite,
- Fig. 8: eine Ansicht des Sperrbolzens von oben,

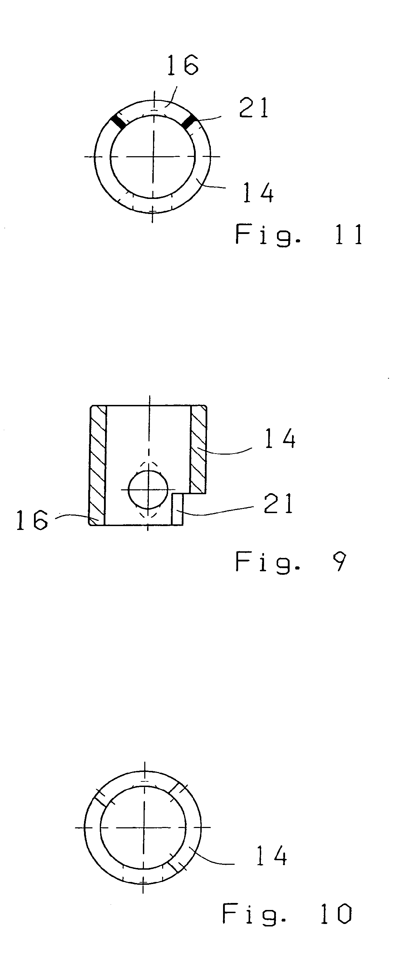

- Fig. 9: einen Längsschnitt durch die Büchse,
- Fig. 10: eine Ansicht der Büchse von oben, und
- Fig. 11: eine Ansicht der Büchse von unten.

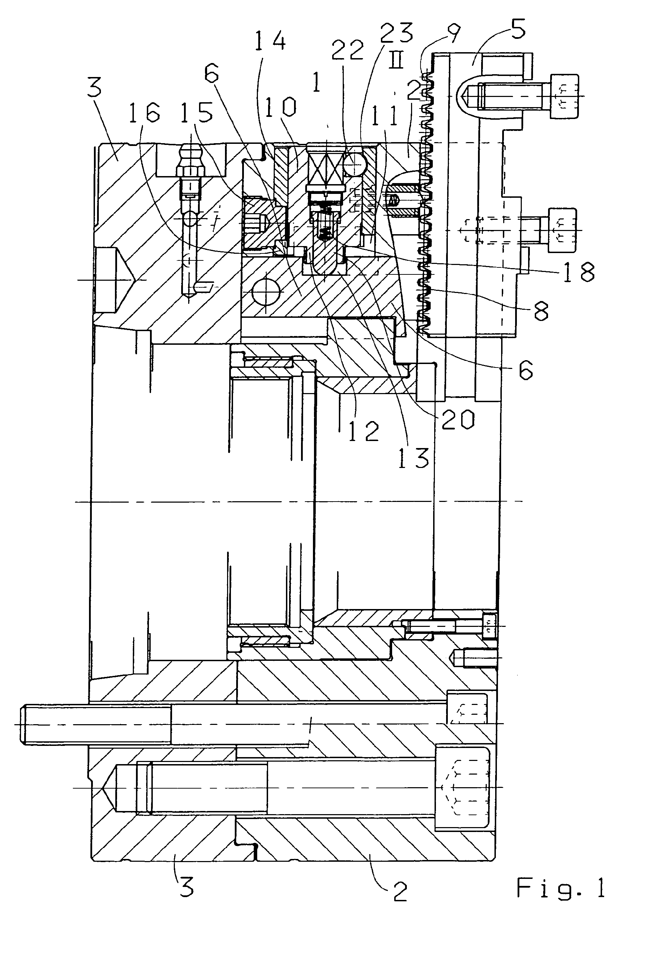

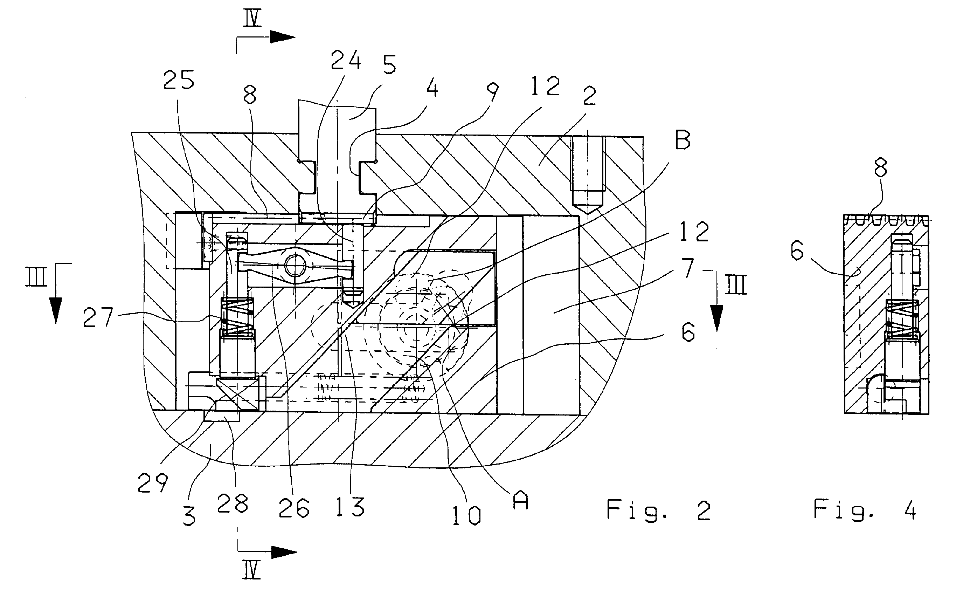

In der Zeichnung dargestellt ist ein Spannfutter 1, das mit seinem Futterkörper 2 an dem Futterflansch 3 einer Werkzeugmaschine angeschlossen ist. In dem Futterkörper 2 sind in mehreren radialen Führungsnuten 4 Spannbacken 5 angeordnet, wobei die Spannbacken 5 zum Öffnen und Schließen des Spannfutters 1 durch Keilstangen 6 antreibbar sind, die im Futterkörper 2 in Keilstangentaschen 7 quer zu den Führungsnuten 4 verschiebbar angeordnet sind und mit Zahnreihen 8 in entsprechende Zahnlücken 9 der Spannbacken 5 zur Bildung einer Schrägverzahnung in Eingriff zu bringen sind. Jeder Keilstange 6 und damit jeder Spannbacke 5 ist ein Sperrbolzen 10 zugeordnet, der in einer radial bezogen auf den Futterkörper 2 orientierten Bolzenaufnahme 11 angeordnet ist und mit einem Bolzenzapfen 12 in eine winkelförmige, im wesentlichen L-förmige, in der Keilstange 6 ausgebildete Nut 13 eingreift. Der Sperrbolzen 10 ist in einer im Futterkörper 2 gegen Verdrehen gesicherten Büchse 14 angeordnet, wobei die Sicherung der Büchse 14 gegen Verdrehen gegenüber dem Futterkörper 2 durch eine Schraube 15 erfolgt, die von dem axial rückwärtigen Ende des Futterkörpers 2 in eine Öffnung der Büchse 14 eingreift. Die Büchse 14 weist an ihrem radial inneren Rand, wiederum bezogen auf den Futterkörper 2, eine in Umfangsrichtung nicht geschlossene Randleiste 16 auf, wobei der Sperrbolzen 10 einen Bolzenflansch 17 besitzt, der neben der Randleiste 16 unter die Wandung der Büchse 14 greift. Dadurch steht in diesem Bereich des Sperrbolzens 10 eine größere Materialstärke zur Verfügung, was ausgenützt wird, indem der Rand des Bolzenzapfens 12 mit dem Rand des Bolzenflansches 17 fluchtet. Der in die winkelförmige Nut 13 eingreifende Bolzenzapfen 12 weist im Querschnitt die Gestalt einer Acht auf mit auf der Drehachse des Sperrbolzens 10 zentrierten einem Auge der Acht, wie sich insbesondere aus den Fig. 2 und 7 erkennen läßt. Jeder Sperrbolzen 10 ist in der Bolzenaufnahme 11 radial gegen die Kraft einer Feder 18 aus einer gegenüber dem Futterkörper 2 gegen Verdrehen gesicherten ersten Stellung (Fig. 1) in eine gegen Verdrehen ungesicherte zweite Stellung verschiebbar, wobei die Randleiste 16 mindestenes einen Anschlag 21 zur Begrenzung des Drehwinkels des Sperrbolzens 10 in dessen zweiter Stellung aufweist, im übrigen aber die Ausdehnung der Randleiste 16 in Umfangsrichtung der Büchse 14 auch so gewählt sein kann, dass in den beiden Grenzpositionen des Sperrbolzen 10 bezogen auf dessen Drehlage ein Anschlag 21 bereit gestellt ist.

In einer Durchgangsöffnung 19 des Sperrbolzens 10 ist ein Bolzenstift 20 angeordnet, der sich auf dem Grund der winkelförmigen Nut 13 in der Keilstange 6 abstützt und die Feder 18 zur Beaufschlagung des Sperrbolzens 10 trägt, der dadurch ohne das Einwirken externer, von dem Bedienungspersonal aufgebrachter Kräfte in der ersten Stellung gehalten ist. Der die Durchgangsöffnung 19 des Sperrbolzens 10 durchsetzende Bolzenstift 20 dient im übrigen einer weiteren Verstärkung des Bolzenzapfens 12 und kann aus einem besonders belastbaren Material hergestellt sein, ohne dass der gesamte Sperrbolzen 10 daraus gefertigt sein muss.

In der die Durchgangsöffnung 19 begrenzenden Wandung des Sperrbolzens 10 ist eine Rastkugel 22 angeordnet, die in der ersten Stellung in eine Rastaufnahme 23 der Büchse 14 eingreift (Fig. 1) und in der zweiten Stellung außer Eingriff ist.

Insbesondere aus Fig. 2 ist ersichtlich, dass in der Keilstange 6 in axialer Richtung des Futterkörpers 2 verstellbar ein Kontrollbolzen 24 und ein Sicherungsbolzen 25 gelagert sind, zu deren gemeinsamer, in entgegengesetzter Richtung erfolgender Verstellung ein Koppelglied 26 vorgesehen ist sowie eine Verstellung des Kontrollbolzens in Richtung der Führungsnut 4 bewirkende Feder 27, wobei in dem mit dem Futterkörper 2 verbundenen Futterflansch 3 eine Rast 28 ausgebildet ist, die den Sicherungsbolzen 25 aufnimmt, wenn der Kontrollbolzen 24 in die Führungnut 4 eingreift.

Ausgehend von der in den Fig. 1 und 2 dargestellten Situation soll nachfolgend der Vorgang beim Wechseln der Spannbacke 5 geschildert werden. Da wird ein Schlüssel in die Durchgangsöffnung 19 eingesetzt, die entsprechende Schlüsselflächen aufweist. Mit diesem Schlüssel wird gegen die Kraft der Feder 18 der Sperrbolzen 10 in seiner axialen Richtung, also der radialen Richtung des Futterkörpers 2, aus der ersten Stellung in die zweite Stellung verstellt, wobei die Rastkugel 22 aus der Rastaufnahme 23 der Büchse 14 austritt. In der zweiten Stellung ist der Bolzenzapfen 12 vollständig in die Nut 13 der Keilstange 6 eingetaucht und der Sperrbolzen 10 kann um seine Drehachse in der Büchse 14 verdreht werden, wodurch der Bolzenzapfen 12 aus der in Fig. 2 mit A bezeichneten Stellung in die in der Fig. 2 mit B bezeichneten Stellung überführt wird. Dabei wird die Keilstange 6 soweit in der Keilstangentasche 7 verschoben, dass die Zahnreihen 8 der Keilstange 6 außer Eingriff mit der Spannbacke 5 gelangen und die Spannbacke 5 aus der Führungsnut 4 entfernt werden kann. Nach dem Entfernen der Spannbacke 5 aus der Führungsnut 4 kann der Kontrollbolzen 24 in die Führungsnut 4 eintreten und sicherstellen, dass ein erneutes Einsetzen einer Spannbacke 5 in die Führungsnut 4 nur dann möglich ist, wenn durch den Nutzer durch das Verdrehen des Sperrbolzens 10 die Keilstangen 6 in der Keilstangentasche 7 in Fig. 2 nach links verstellt wird und dadurch über die Anlaufschräge 29 der Sicherungsbolzens 25 verschoben und mittels des Koppelgliedes 26 der Kontrollbolzen 24 wieder aus der Führungsnut 4 entfernt und die Spannbacke 5 eingesetzt werden kann. Die eingesetzte Spannbacke 5 verhindert ein zu tiefes Eindringen des Kontrollbolzens 24 in die Führungsnut 4, so dass der Sperrbolzen 10 wieder zurück gedreht werden und aus seiner zweiten Stellung in die erste Stellung übergeführt werden kann, in der die Rastkugel 22 wieder in die Rastaufnahme 23 eintritt und die Feder 18 und der Bolzenstift 20 bewirken, dass der Sperrbolzen 10 in der ersten Stellung gehalten wird.

## Patentansprüche

1. Spannfutter für Werkzeugmaschinen, insbesondere Drehmaschinen, mit einem Futterkörper (2), in dem in mehreren radialen Führungsnuten (4) Spannbacken (5) angeordnet sind, mit die Spannbacken (5) antreibenden, im Futterkörper (2) in Keilstangentaschen (7) quer zu den Führungsnuten (4) verschiebbaren Keilstangen (6), die zur Bildung einer Schrägverzahnung mit Zahnreihen (8) in entsprechende Zahnlücken (9) der Spannbacken (5) in Eingriff zu bringen sind, und mit einem Sperrbolzen (10) für jede Keilstange (6), der in einer radial im Futterkörper (2) orientierten Bolzenaufnahme (11) angeordnet ist und mit einem Bolzenzapfen (12) in eine winkelförmige, in der Keilstange (6) ausgebildete Nut (13) eingreift, **dadurch gekennzeichnet, daß** der Sperrbolzen (10) in einer im Futterkörper (2) gegen Verdrehen gesicherten Büchse (14) angeordnet ist, die am radial inneren Rand eine in Umfangsrichtung nicht geschlossene Randleiste (16) aufweist, daß der Sperrbolzen (10) einen Bolzenflansch (17) besitzt, der neben der Randleiste (16) unter die Wandung der Büchse (14) greift, und daß der Rand des Bolzenzapfens (12) mit dem Rand des Bolzenflanschs (17) fluchtet.

2. Spannfutter nach Anspruch 1, **dadurch gekennzeichnet, daß** der in die winkelförmige Nut (13) eingreifende Bolzenzapfen (12) im Querschnitt die Gestalt einer Acht aufweist mit auf der Drehachse des Sperrbolzens (10) zentriertem einen Auge der Acht.

3. Spannfutter nach Anspruch 1 oder 2, **dadurch gekennzeichnet, daß** zum Backenwechsel jeder Sperrbolzen (10) in der Bolzenaufnahme (11) radial gegen die Kraft einer Feder (18) aus einer gegenüber dem Futterkörper (2) gegen Verdrehen gesicherten ersten Stellung in eine gegen Verdrehen ungesicherte zweite Stellung verschiebbar ist.

4. Spannfutter nach Anspruch 3, **dadurch gekennzeichnet, daß** die Randleiste (16) mindestens einen Anschlag (21) zur Begrenzung des Drehwinkels des Sperrbolzens (10) in dessen zweiter Stellung aufweist.

5. Spannfutter nach Anspruch 3 oder 4, **dadurch gekennzeichnet, daß** in einer Durchgangsöffnung (19) des Sperrbolzens (10) ein Bolzenstift (20) angeordnet ist, der sich auf dem Grund der winkelförmigen Nut (13) in der Keilstange (6) abstützt und die Feder (18) zur Beaufschlagung des Sperrbolzens (10) trägt.

6. Spannfutter nach Anspruch 5, **dadurch gekennzeichnet, daß** in der die Durchgangsöffnung (19) begrenzenden Wandung des Sperrbolzens (10) eine Rastkugel (22) angeordnet ist, die in der ersten Stellung in eine Rastaufnahme (23) der Büchse (14) eingreift und in der zweiten Stellung außer Eingriff ist.

7. Spannfutter nach einem der Ansprüche 1 bis 6, **dadurch gekennzeichnet, daß** in der Keilstange (6) in axialer Richtung des Futterkörpers (2) verstellbar ein Kontrollbolzen (24) und ein Sicherungsbolzen (25) gelagert sind, zu deren gemeinsamer, in entgegengesetzter Richtung erfolgender Verstellung ein Koppelglied (26) vorgesehen ist sowie eine eine Verstellung des Kontrollbolzens (24) in Richtung der Führungsnut (4) bewirkende Feder (27), und daß in dem mit dem Futterkörper (2) verbundenen Futterflansch (3) eine Rast (28) ausgebildet ist, der den Sicherungsbolzen (25) aufnimmt, wenn der Kontrollbolzen (24) in die Führungsnut (4) eingreift.
